## Europäisches Patentamt
## European Patent Office
## Office européen des brevets

(19)

(11) Veröffentlichungsnummer: **0 167 477**
**B1**

(12) **EUROPÄISCHE PATENTSCHRIFT**

(45) Veröffentlichungstag der Patentschrift:
25.01.89

(21) Anmeldenummer: **85730055.2**

(22) Anmeldetag: **09.04.85**

(51) Int. Cl.⁴: **A 23 B 4/10,** A 23 B 7/16,
A 23 C 19/16

(54) Verpackung für Lebensmittel.

(30) Priorität: **06.04.84 DE 3413497**

(43) Veröffentlichungstag der Anmeldung:
**08.01.86 Patentblatt 86/2**

(45) Bekanntmachung des Hinweises auf die Patenterteilung:
**25.01.89 Patentblatt 89/4**

(84) Benannte Vertragsstaaten:
**AT BE CH DE FR GB IT LI NL**

(56) Entgegenhaltungen:
**CH-A-419 816**
**DE-A-2 222 280**
**DE-B-1 142 269**
**DE-B-1 150 268**
**FR-A-1 358 127**

**Die Akte enthält technische Angaben, die nach dem Eingang der Anmeldung eingereicht wurden und die nicht in dieser Patentschrift enthalten sind.**

(73) Patentinhaber: **Beuttenmüller, Albert, Birkenhof 9, D-2093 Stelle (DE)**
Patentinhaber: **Horn, Jutta, Birkenhof 9, D-2093 Stelle (DE)**

(72) Erfinder: **Beuttenmüller, Albert, Birkenhof 9, D-2093 Stelle (DE)**
Erfinder: **Horn, Jutta, Birkenhof 9, D-2093 Stelle (DE)**

(74) Vertreter: **Scholz, Hartmut, Dipl.- Ing., Bundesallee 74, D-1000 Berlin 41 (Friedenau) (DE)**

EP 0 167 477 B1

## Beschreibung

Die Erfindung betrifft eine Verpackung für Lebensmittel, insbesondere für Fleisch- und Wurstwaren, bestehend aus einer luft- und wasserdampfundurchlässigen Mischpolymerisatschicht, ein Verfahren zur Herstellung einer solchen Verpackung sowie die Verwendung einer ethanolischen Mischpolyamidlösung zur Bildung einer elastischen, formangepaßten Verpackungsschicht.

Wurst- und Fleischwaren werden zumeist in Großbetrieben hergestellt. Daran schließen sich verschiedene Verteilungswege an. Ein Teil der Waren gelangt in Selbstbedienungsläden, ein anderer Teil wird in größeren Gebinden an Hotels, Metzgereien oder andere Weiterverkäufer geliefert. Während die SB-Waren verpackt und mit Preisauszeichnungen versehen werden müssen, geht der andere Teil der Waren, insbesondere Frischwurst, als unverpackte Ware an die Abnehmer.

Ein Problem für den Hersteller der Waren besteht darin, daß er zum Zeitpunkt der Fertigung der Waren nicht weiß, an welchen Abnehmer sie gelangen. In der Regel liegen nämlich zwischen Fertigung und Verkauf zwei bis vier Wochen. In diesem Zeitraum erleidet jedoch die unverpackte Ware einen erheblichen Gewichtsverlust, so daß zum Verkaufszeitpupkt die ursprünglich ermittelten Gewichte nicht mehr zutreffen.

Eine Aufgabe der Erfindung ist es somit, ein Verfahren zur Verfügung zu stellen, mit dem ein Gewichtsverlust der unverpackten Ware reduziert oder verhindert werden kann.

Die Verpackung der sogenannten SB-Ware geschieht durch Einbeuteln in Kunststoffbeutel, die evakuiert und verschweißt werden, wodurch luft- und wasserdampfdichte Verpackungen entstehen, die das Lebensmittel länger frischhalten und gegen Gewichtsverlust schützen. Außerdem wird die verpackte Ware anschließend gewogen und mit einem Preis versehen. Soll nun diese so verpackte Ware später doch als lose Ware verkauft werden, so war das kostenintensive Verpacken und Auspreisen überflüssig und führt lediglich zu zusätzlichen Kosten. Ferner ist zum Einbeuteln eine besondere Vorrichtung erforderlich, die Beutel müssen separat hergestellt werden und die Verpackungen sind durch überstehende Beutelteile häufig sehr sperrig. Darüber hinaus schließen die Verpackungen nicht immer dicht und können auch durch den Verpackungsinhalt während des Transports beschädigt werden. Dadurch wird wiederum die Haltbarkeit des Inhaltes in Frage gestellt.

Demnach ist es eine weitere Aufgabe der Erfindung, ein wenig Aufwand erforderndes Verpackungsverfahren zu schaffen, durch das insbesondere Fleisch und Wurstwaren mit einer gegen Luft und Wasserdampf dichten Verpackung versehen werden, die stoßunempfindlich ist und handliche Verpackungsgrößen ermöglicht.

Aus der DE-B-2 324 936 ist beispielsweise ein Mittel zum Herstellen von Überzügen auf geräucherten Fleischwaren bekannt. Dieses besteht aus einem Überzug aus einem acetylierten Monoglycerid und einem Cellulosepropionat. Diese Überzüge sind jedoch wasserdampfdurchlässig und weisen den weiteren Nachteil auf, daß sie in Form einer lebensmitteltechnisch nicht unbedenklichen Aceton-Lösung aufgesprüht werden oder durch Eintauchen in eine derartige Lösung beschichtet werden.

Ein ähnliches Verfahren wird auch in der DE-C2-3 012 192 beschrieben. Auch dort wird ein acetyliertes Monoglycerid eingesetzt, welches mit Paraffinwachsen und gegebenenfalls mikrokristallinen Wachsen sowie mit Celluloseestern kombiniert wird. Zusätzlich ist dieser Überzug pigmentiert. Er weist ebenfalls die zuvor beschriebenen Nachteile auf und erfordert außerdem ein kostenintensives Herstellungsverfahren.

In der US-A-3 471 304 wird ein Lebensmittel-Überzug beschrieben, der aus den drei Komponenten Celluloseether, speziellen Glyceriden und Metallsalzen von Fettsäuren mit 16 bis 22 Kohlenstoffatomen besteht. Bei dieser Lehre geht es primär darum, einen verzehrbaren Überzug zu schaffen. Die dort vorgeschlagenen Überzüge reichen allein zum Schutz der Ware nicht aus, sondern erfordern einen zusätzlichen Schutz der Lebensmittel gegenüber oxidativem Abbau.

Aus der US-A-2 849 320 ist ein Verfahren zur Herstellung einer Beschichtung für Lebensmittel bekannt, bei dem beispielsweise Wurstwaren mit einer Emulsion von Vinylidenharz in Wasser beschichtet werden. Dieser Überzug erfordert ein Plastifizierungsmittel, welches unter ungünstigen Bedingungen zu gesundheitlichen Beeinträchtigungen führen kann.

Aus der DE-B-1 150 268 ist es bekannt, daß eine wässerige Dispersion eines Mischpolymerisats als Umhüllungsmaterial für Lebensmittel, insbesondere für Schinken, Wurst oder Käse verwendet werden kann. Aus der FP-A-1 358 127 ist ebenfalls eine Schutzumhüllung für Nahrungsmittel bekannt, bei der eine wässerige Emulsion aus Mischpolymerisaten zur Anwendung kommt. Schließlich ist es aus der CH-A-419 816 bekannt, eine wässerige Kopolymeremulsion zur Haltbarmachung von Lebensmitteln zu verwenden. Diese Emulsion soll zunächst einen elastischen Film bilden, auf den eine gasundurchlässige Folie aufgebracht wird, die nach der Trocknung zu einer dichten Verpackung zusammenwächst. Es hat sich nun gezeigt, daß die bei Verwendung derartiger Dispersionen und Emulsionen entstehenden Umhüllungsschichten nur sehr schwer entfernbar sind und leicht zu einem Bestandteil des Lebensmittels selbst werden. Außerdem sind diese Schichten nur in einem relativ engen Temperaturbereich verwendbar.

Aufgabe der vorliegenden Erfindung ist es, eine Mischpolymerisatschicht zu schaffen, die sich als Verpackungsfolie sauber und in einem Stück von dem verpackten Lebensmittel abziehen läßt, sowie ein Verfahren zu ihrer Herstellung.

Gelöst wird diese Aufgabe dadurch, daß die Mischpolymerisatschicht als eine direkt auf das zu verpackende Lebensmittel überstandsfrei aufgebrachte Schicht eines in Ethanol löslichen Mischpolyamids aus der Gruppe der durch die Umsetzung von Dicarbonsäuren und Diaminen, ω-Aminosäuren und Diaminen, Diisocyanaten und Dicarbonsäuren oder aus Lactamen hergestellten Mischpolyamide, insbesondere der durch Polymerisation von Caprolactam, Hexamethylendiamin/Adipinsäure und p, p'-Diaminodicyclohexylmethan/Adipinsäre hergestellten Mischpolyamide, ausgebildet ist.

Bei dem Verfahren zur Herstellung einer solchen Verpackung für Lebensmittel, insbesondere für Fleisch- und Wurstwaren, bestehend aus einer durch Tauchen oder Sprühen aufgetragenen Mischpolymerisatschicht, ist es vorgesehen, daß eine ethanolische Lösung eines Mischpolyamids aus der Gruppe der durch die Umsetzung von Dicarbonsäuren und Diaminen, ω - Aminosäuren und Diaminen, Diisocyanaten und Dicarbonsäuren oder aus Lactamen hergestellten Polyamide, insbesondere der durch Polymerisation von Caprolactam, Hexamethylendiamin/Adipinsäure und p, p'-Diaminodicyclohexylmethan/Adipinsäre hergestellten Mischpolyamide, direkt auf das zu verpackende Lebensmittel oder auf eine Gelatine- oder Mischpolyamid- zwischenschicht oder vorhandene Schutzschicht aufgetragen und dort zu einer luft- und wasserdampfdichten Schicht ausgetrocknet wird.

Durch diese Maßnahmen wird eine Verpackung geschaffen, die als Verpackungsfolie in einem Stück vom dem verpackten Lebensmittel abziehbar ist. Ferner hat sich gezeigt, daß eine solche Verpackungsschicht für einen breiteren Temperatur-Einsatzbereich geeignet ist.

Die erfindungsgemäße Schicht kann direkt auf das Lebensmittel aufgebracht sein oder sie kann sich an eine Gelatineschicht anschließen. Falls es gewünscht ist, kann die Gelatineschicht oder die Mischpolymerisatschicht einen Geruchsstoff enthalten. Dies ist aber nicht unbedingt erforderlich, da die erfindungsgemäße Verpackung semipermeabel ist und die verpackten Lebensmittel ihr natürliches Aroma entfalten können und auch durch die Verpackung abgeben.

In einer weiteren bevorzugten Ausführungsform kann eine erste erfindungsgemäße Verpackungsschicht unmittelbar auf dem Lebensmittel aufgebracht sein, die von mindestens einer weiteren Mischpolymerisatschicht überzogen ist, welche Konservierungsmittel enthält. Das Konservierungsmittel kommt so nicht unmittelbar mit dem Lebensmittel in Kontakt. Es hat sich gezeigt, daß bakterieller oder Pilzbefall von außen auf das Lebensmittel eindringt und mit einer Konservierungsmittel enthaltenden Verpackungsschicht wirksam aufgehalten werden kann.

Vorzugsweise ist mindestens eine der Verpackungsschichten semipermeabel; besonders bevorzugt ist jedoch, wenn die gesamte Verpackung semipermeabel ist.

Die erfindungsgemäße Verpackung kann auf die entsprechenden Lebensmittel durch einfaches Eintauchen der Waren in eine ethanolische Lösung aufgebracht werden. Das Mischpolymerisat kann in seiner auspolymerisierten Form vorliegen oder als Vorpolymer, welches beim Trocknungsvorgang weiterpolymerisiert bzw. vernetzt und aushärtet.

Vorzugsweise handelt es sich um Lösungen mit einem Gehalt an Mischpolyamid von 5 bis 30 Gew.-%.

Die Lösung kann auch auf das Lebensmittel selbst oder auf eine bereits vorhandene Schutzschicht aufgesprüht werden, sofern es die Viskosität zuläßt.

Dadurch wird eine luft- und wasserdampfdichte Schicht geschaffen, die einen Gewichtsverlust der verpackten Ware ausschließt. Außerdem ist diese Schicht nach dem Aushärten elastisch, aber gleichzeitig so fest und schmiegt sich den Formen des verpackten Lebensmittels derart an, daß eine Zerstörung der Verpackung praktisch auszuschließen ist. Gleichzeitig werden auf diese Weise überstehende Verpackungsteile vermieden, so daß auch der Raumbedarf für das verpackte Lebensmittel dem Minimalvolumen entspricht.

In einer weiteren Ausführungsform kann dem Mischpolyamid ein weiteres Mittel zur Verringerung der Adhäsion zwischen den einzelnen Verpackungen beigefügt werden, beispielsweise ein Speiseöl.

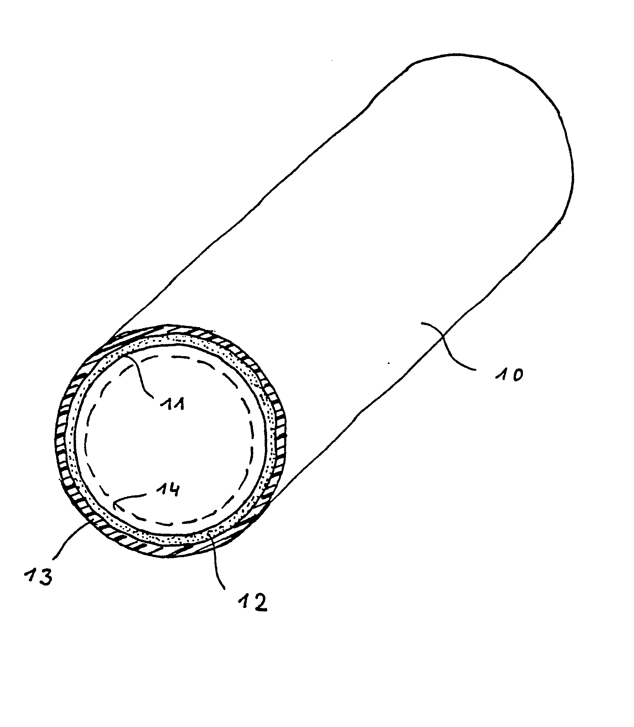

Weitere vorteilhafte Maßnahmen sind in den abhängigen Ansprüchen beschrieben. Die Erfindung ist schematisch in der beiliegenden Zeichnung anhand eines Ausführungsbeispiels dargestellt und wird nachfolgend näher beschrieben.

Das zu verpackende Lebensmittel, beispielsweise eine Frischwurst 10, wird bei der Herstellung meist in einen Kunstdarm 11 gefüllt. Dieser Kunstdarm 11 ist weder luft- noch wasserdampfdicht. Durch auch vorübergehende Lagerung verliert die Wurst 10 durch Verdunstung schnell an Gewicht. Dabei ist der Gewichtsverlust in den äußeren Schichten 14 zunächst größer. Dies führt zu einer Verfärbung und/oder Verformung, die beim Käufer einen minderwertigen Eindruck hervorruft.

Um den Kunstdarm 11 luft- und wasserdampfdicht abzudichten, wird er in eine ethanolische Lösung eines Mischpolyamids getaucht und mit einer Mischpolyamidschicht 13 überzogen. Diese Mischpolyamidschicht 13 wird anschließend getrocknet und bildet eine luft-, sauerstoff- und wasserdampfdichte Vorpackung.

Bei einer anderen Ausführungsform wird die Wurst 10 zunächst in eine Gelatinesuspension getaucht und mit eine Gelatineschicht 12 überzogen. Auf diese Gelatineschicht 12 wird die Mischpolyamidschicht aufgetragen. Diese zweite Schicht aus Mischpolyamid kann Konservierungsmittel oder auch Gewürze, beispielsweise Pfeffer enthalten. Bei dieser letztgenannten Ausführungsform kann an Stelle der Gelatine auch ein Mischpolyamid als erste Schicht 12 verwendet werden.

Bei einer Ausführungsform der Erfindung ist es vorgesehen, der Mischpolyamidlösung einen lichtabsorbierenden, insbesondere einen UV-Licht absorbierenden Zusatz beizugeben. Durch diese Maßnahme wird - in Zusammenhang mit der Sauerstoffdichtigkeit der entstandenen Verpackungsfolie - eine Oxidation des in dem verpackten Lebensmittel üblicherweise enthaltenen Fettes vermieden.

**Patentansprüche**

1. Verpackung für Lebensmittel, insbesondere für Fleisch- und Wurstwaren, bestehend aus einer luft- und wasserdampfundurchlässigen Mischpolymerisatschicht, dadurch gekennzeichnet, daß die Mischpolymerisatschicht als eine direkt auf das zu verpackende Lebensmittel (10, 11) oder auf eine Gelatline- oder Mischpolyamid-Zwischenschicht oder vorhandene Schutzschicht überstandsfrei aufgebrachte Schicht (13) eines in Ethanol löslichen Mischpolyamids aus der Gruppe der durch die Umsetzung von Dicarbonsäuren und Diaminen, ω -Aminosäuren und Diaminen, Diisocyanaten und Dicarbonsäuren oder aus Lactamen hergestellten Mischpolyamide, insbesondere der durch Polymerisation von Caprolactam, Hexamethylendiamin/Adipinsäure und p, p'-Diaminodicyclohexylmethan/Adipinsäure hergestellten Mischpolyamide, ausgebildet ist.

2. Verpackung nach Anspruch 1, dadurch gekennzeichnet, daß die Mischpolyamidschicht (13) für Aroma und für Wasserdampf semipermeabel ist.

3. Verfahren zur Herstellung einer Verpackung für Lebensmittel, insbesondere für Fleisch- und Wurstwaren, nach Anspruch 1 oder 2, bestehend aus einer durch Tauchen oder Sprühen aufgetragenen Mischpolymerisatschicht, dadurch gekennzeichnet, daß eine ethanolische Lösung eines Mischpolyamids aus der Gruppe der durch die Umsetzung von Dicarbonsäuren und Diaminen, ω-Aminosäuren und Diaminen, Diisocyanaten und Dicarbonsäuren oder aus Lactamen hergestellten Polyamide, insbesondere der durch Polymerisation von Caprolactam, Hexamethylendiamin/Adipinsäure und p, p'-Diaminodicyclohexylmethan/Adipinsäre hergestellten Mischpolyamide direkt auf das zu verpackende Lebensmittel oder auf eine Gelatine- oder Mischpolyamid-Zwischenschicht oder vorhandene Schutzschicht aufgetragen und dort zu einer luft- und wasserdampfdichten Schicht ausgetrocknet wird.

4. Verfahren nach Anspruch 3, dadurch gekennzeichnet, daß eine ethanolische Lösung mit 5 bis 30 Gew.-% des Mischpolyamids zur Bildung einer Verpackungsschicht verwendet wird.

5. Verfahren nach den Ansprüchen 3 oder 4, dadurch gekennzeichnet, daß der ethanolischen Mischpolyamidlösung ein UV-Licht absorbierender Zusatz zugemischt wird.

6. Verfahren nach den Ansprüchen 3 bis 5, dadurch gekennzeichnet, daß der ethanolischen Mischpolyamidlösung Gewürz zugemischt wird.

7. Verwendung der ethanolischen Mischpolyamidlösung nach Anspruch 3 zur Bildung einer elastischen, formangepaßten Verpackungsschicht für Lebensmittel, inbesondere für Fleisch- und Wurstwaren.

8. Verwendung einer ethanolischen Mischpolyamidlösung gemäß Anspruch 7 zum direkten Auftragen auf ein zu verpackendes Lebensmittel, die dort zu einer luft- und wasserdampf dichten Verpackungschicht ausgetrocknet wird.

**Claims**

1. Packaging for foodstuffs, and especially for meat and sausage goods, consisting of an air- and water vapour-tight copolymer layer, characterised in that the copolymer layer is formed as a layer (13) of an ethanol-soluble copolyamide from the group of copolyamides formed by reaction between dicarboxylic acids and diamines, ω -amino acids and diamines, diisocyanates and dicarboxylic acids, or from lactams, and especially copolymers formed by the polymerisation of caprolactam, hexamethylenodiamine/ adipic acid and p,p'-diaminodicyclohexylmethane/adipic acid and is applied as a projection-free layer directly onto the foodstuff (10,11) to be packaged or on to a gelatinous or copolyamide intermediate layer or an already-present protective layer.

2. Packaging according to claim 1, characterised in that the copolymer layer (13) is semi-permeable to aromas and water vapour.

3. Process for the manufacture of a packaging for foodstuffs, and especially for meat and sausage goods according to claim 1 or 2, consisting of a copolymer layer applied by dipping or spraying, characterised in that an ethanolic solution of a copolyamide from the group formed by reaction between dicarboxylic acids and diamines, ω -amino acids and diamines, diisocyantes and dicarboxylic acids, or from lactams, and especially copolymers formed by the polymerisation of caprolactam, hexamethylene/adipic acid and p, p'- diaminodicyclohexylmethane/adipic acid is applied direct to the foodstuff to be packed or onto a gelatinous or copolyamide intermediate layer or an already-present protective layer and is dried thereon to form an air- and water vapour-tight layer.

4 Process according to claim 3, characterised in that an ethanolic solution containing 5 to 30 weight per cent of the copolyamide is used to form a packaging layer.

5. Process according to claims 3 and 4, characterised in that the ethanolic copolyamide solution is mixed with a UV-light absorbing additive.

6. Process according to claims 3 to 5, characterised in that the ethanolic copolyamide solution is mixed with spice.

7. Use of the ethanolic copolyamide solution according to claim 3 to form an elastic form-fitting packaging layer for foodstuffs, especially for meat and sausage goods.

8. Use of an ethanolic copolyamide solution according to claim 7 for the direct application to a foodstuff to be packaged, which solution is dried thereon to form an air- and water-vapour-tight packaging layer.

**Revendications**

1. Emballage pour aliments, en particulier pour la viande et la charcuterie, composé d'une couche de copolymère imperméable à l'air et à la vapeur d'eau, caractérisé par le fait que la couche de copolymère est constituée par une couche (13) d'un copolyamide soluble dans l'éthanol du groupe des copolyamides fabriqués par la réaction d'acides dicarboxyliques et de diamines, d'acides ω-aminés et de diamines, de diisocyanates et d'acides dicarboxyliques, ou à partir de lactames, en particulier des copolyamides fabriqués par polymérisation de caprolactame, d'hexaméthylènediamine/acide adipique et de diamino-p-p'-dicyclohexylméthane/acide adipique, couche qui est déposée sans débordement, soit directement sur la denrée alimentaire à emballer (10, 11), soit sur une couche intermédiaire ou une couche protectrice existante en gélatine ou en copolyamide.

2. Emballage selon la revendication 1, caractérisé par le fait que la couche de copolyamide (13) est semi-perméable aux odeurs et à la vapeur d'eau.

3. Procédé pour la fabrication d'un emballage pour aliments, en particulier pour la viande et la charcuterie, selon la revendication 1 ou 2, composé d'une couche de copolymère déposée par immersion ou par pulvérisation, caractérisé par le fait que l'on dépose directement sur la denrée alimentaire à emballer, ou sur une couche intermédiaire ou une couche protectrice existante en gélatine ou en copolyamide, une solution dans l'éthanol d'un copolyamide du groupe des copolyamides fabriqués par la réaction d'acides dicarboxyliques et de diamines, d'acides ω-aminés et de diamines, de diisocyanates et d'acides dicarboxyliques, ou à partir de lactames, en particulier des copolyamides fabriqués par polymérisation de caprolactame, d'hexaméthylènediamine/acide adipique et de diamino-p-p'-dicyclohexylméthane/acide adipique, et qu'on la sèche pour former une couche imperméable à l'air et à la vapeur d'eau.

4. Procédé selon la revendication 3, caractérisé par le fait que l'on utilise pour former une couche d'emballage une solution dans l'éthanol contenant 5 à 30 % en poids du copolyamide.

5. Procédé selon les revendications 3 et 4, caractérisé par le fait que l'on mélange à la solution de copolyamide dans l'éthanol un additif absorbant la lumière ultraviolette.

6. Procédé selon les revendications 3 à 5, caractérisé par le fait que l'on mélange des épices à la solution de copolyamide dans l'éthanol.

7. Utilisation de la solution de copolyamide dans l'éthanol selon la revendication 3 pour former une couche d'emballage élastique et de forme ajustée pour les aliments, en particulier pour la viande et la charcuterie.

8. Utilisation d'une solution de copolyamide dans l'éthanol selon la revendication 7 pour la déposer directement sur une denrée alimentaire à emballer et l'y faire sécher pour former une couche d'emballage étanche à l'air et à la vapeur d'eau.